# EUROPEAN PATENT APPLICATION

(11) **EP 4 700 561 A1**
(43) Date of publication of application: **25.02.2026**
(21) Application number: 25190691.3
(22) Date of filing: 21.07.2025
(51) Int. Cl.: G06F 3/12

(54) **PRINT SERVER, PRINT SYSTEM, AND PRINT METHOD**

(30) Priority: 23.08.2024 JP 2024141982
(71) Applicant: Toshiba TEC Kabushiki Kaisha, Tokyo 141-8562 (JP)
(72) Inventor: SAEKI, Kosei, Shinagawa-ku, Tokyo, 141-8562 (JP)
(74) Representative: Hoffmann Eitle

(57) **Abstract**

According to one embodiment, a print server including a memory, a communication interface, and a processor is provided. The memory is configured to store first management information that correlates printer identification information for identifying a printer with an unlock code for the printer. The processor is configured to transmit registration destination information of a print job to the client terminal through the communication interface in response to a registration request for the print job transmitted from the client terminal, register the print job transmitted from the client terminal in a registration destination indicated by the registration destination information, transmit the unlock code to the printer through the communication interface, specify the printer from the first management information based on the unlock code included in a first release request for the print job transmitted from the client terminal that reads print designation information including the unlock code displayed on the printer, and cause the specified printer to print an image based on the print job registered in the registration destination.

## Description

### CROSS-REFERENCE TO RELATED APPLICATION

This application is based upon and claims the benefit of priority from Japanese Patent Application No. 2024-141982, filed on August 23, 2024, the entire contents of which are incorporated herein by reference.

### FIELD

Embodiments described herein relate generally to a print server, a print system, and a print method.

### BACKGROUND

A print system configured with a client terminal, a print server, and a printer is known. In the print system, the client terminal transmits print data to the print server and the printer acquires a print job list including file names and location information of the print data on the print server. The printer acquires designated print data from the print server and prints the print data. For example, in an environment in which a plurality of printers are connected to a network and these printers are registered as devices in the print server, a printer selected from the plurality of printers registered as devices prints the acquired print data.

Furthermore, various proposals have also been made regarding such a print system.

### SUMMARY OF THE INVENTION

One of the objects of the present invention is to improve prior art techniques and overcome at least some of the prior art problems as for instance above illustrated.

According to a first aspect of the invention, it is provided a print server comprising a memory configured to store first management information that correlates printer identification information for identifying a printer with an unlock code for the printer; a communication interface configured to communicate with a client terminal and the printer; and a processor configured to control transmission and reception of information by the communication interface, wherein the processor is configured to transmit registration destination information of a print job to the client terminal through the communication interface in response to a registration request for the print job transmitted from the client terminal; register the print job transmitted from the client terminal in a registration destination indicated by the registration destination information; transmit the unlock code to the printer through the communication interface; and specify the printer from the first management information based on the unlock code included in a first release request for the print job transmitted from the client terminal that reads print designation information including the unlock code displayed on the printer, and cause the specified printer to print an image based on the print job registered in the registration destination.

Optionally, in the server according to the first aspect of the invention, the first management information is further information that correlates the printer identification information with the registration destination information, and the processor is configured to transmit a second release request to the printer through the communication interface; and transmit the print job registered in the registration destination to the printer through the communication interface in response to a request for the print job from the printer that detects the print job list included in the second release request.

Optionally, in the server according to the first aspect of the invention, wherein the memory is configured to store second management information that correlates account information with a print token, and the processor is configured to permit a login request based on the account information from the client terminal; transmit the print token to the client terminal; store the second management information that correlates the account information with the print job in the memory in response to the registration request including the print token from the client terminal; and specify the print job from the second management information in response to the release request including the print token from the client terminal.

According to a second aspect of the invention, it is provided a print system comprising a print server configured to store first management information that correlates printer identification information for identifying a printer with an unlock code for the printer; and the printer specified by the printer identification information, wherein the print server is configured to transmit registration destination information of a print job to the client terminal in response to a registration request for the print job transmitted from the client terminal; register the print job transmitted from the client terminal in a registration destination indicated by the registration destination information; transmit the unlock code to the printer; and specify the printer from the first management information based on the unlock code included in a release request for the print job transmitted from the client terminal that reads print designation information including the unlock code displayed on the printer, and cause the specified printer to print the print job registered in the registration destination, and the printer is configured to print an image based on the print job registered in the registration destination.

Optionally, in the system according to the second aspect of the invention, the print system comprises the client terminal, and the client terminal is configured to read the print designation information displayed on the printer; and transmit the release request to the print server.

According to a third aspect of the invention, it is provided a print method comprising storing first management information that correlates printer identification information for identifying a printer with an unlock code for the printer; transmitting registration destination information of a print job to the client terminal in response to a registration request for the print job transmitted from the client terminal; registering the print job transmitted from the client terminal in a registration destination indicated by the registration destination information; transmitting the unlock code to the printer; and specifying the printer from the first management information based on the unlock code included in a release request for the print job transmitted from the client terminal that reads print designation information including the unlock code displayed on the printer, and causing the specified printer to print an image based on the print job registered in the registration destination.

### DESCRIPTION OF THE DRAWINGS

FIG. 1 is a diagram illustrating an example of a network configuration of devices that configure a print system according to an embodiment;
FIG. 2 is a block diagram illustrating an example of internal configurations of devices that configure the print system;
FIG. 3 is a diagram illustrating an example of a device registration list and an account registration file;
FIG. 4 is a diagram illustrating an example of an operation sequence of a print system;
FIG. 5 is a flowchart illustrating an example of an operation of a client terminal;
FIG. 6 is a flowchart illustrating an example of an operation of a server; and
FIG. 7 is a flowchart illustrating an example of an operation of a printer.

### DETAILED DESCRIPTION

In the print system described above, simplification of user operations is desired. For example, when realizing printing based on a target print file on a printer's panel, a selection operation of the target print file may occur, but a mechanism to omit this selection operation and output the target print file is needed.

Embodiments described herein provide a print server, a print system, and a print method that reduce an operational burden for print output.

In general, according to one embodiment, a print server including a memory, a communication interface, and a processor is provided. The memory is configured to store first management information that correlates printer identification information for identifying a printer with an unlock code for the printer. The communication interface is configured to communicate with a client terminal and the printer. The processor is configured to control transmission and reception of information by the communication interface. The processor is configured to transmit registration destination information of a print job to the client terminal through the communication interface in response to a registration request for the print job transmitted from the client terminal, register the print job transmitted from the client terminal in a registration destination indicated by the registration destination information, transmit the unlock code to the printer through the communication interface, and specify the printer from the first management information based on the unlock code included in a first release request for the print job transmitted from the client terminal that reads print designation information including the unlock code displayed on the printer, and cause the specified printer to print an image based on the print job registered in the registration destination.

A print system according to an embodiment will be described below with reference to the drawings.

### [Configuration]

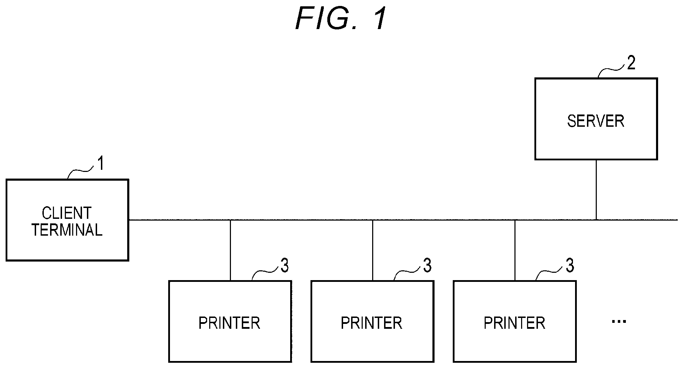

FIG. 1 is a diagram illustrating an example of a network configuration of devices that configure a print system according to an embodiment.

As illustrated in FIG. 1, the print system includes a client terminal 1, a server 2 that functions as a print server, and a printer 3 that forms an image based on print data from the server 2. The client terminal 1, the server 2, and the printer 3 are connected via a communication network.

For example, as illustrated in FIG. 1, a plurality of printers 3 are connected to the communication network. In addition, FIG. 1 illustrates an example in which one client terminal 1 is connected to the communication network, but two or more client terminals 1 can be simultaneously connected to a network of the print system.

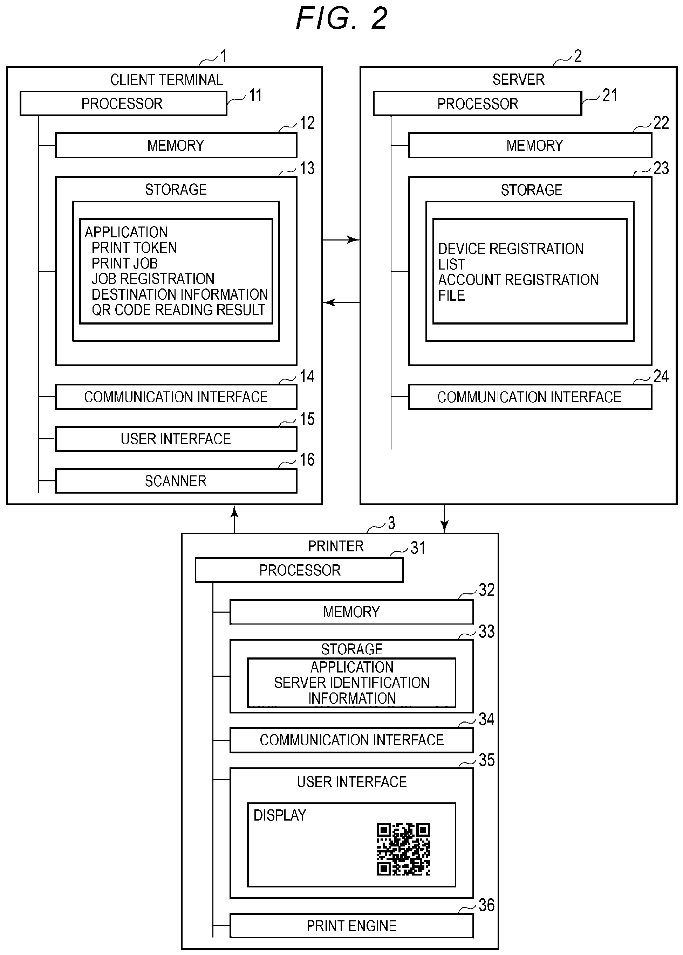

FIG. 2 is a block diagram illustrating an example of internal configurations of devices that configure a print system according to the embodiment.

The client terminal 1 may be realized by a computer including one or more processors, memories, storage, and interfaces. As illustrated in FIG. 2, the client terminal 1 includes a processor 11, a memory 12, a storage 13, a communication interface 14, a user interface 15, and a scanner 16.

The processor 11 is configured with a central processing unit (CPU) and the like. The processor 11 executes various processes based on a control program and control data stored in the memory 12. For example, the processor 11 executes a print support application program stored in the memory 12 to cause a print process to be executed by the printer 3 through the server 2.

The memory 12 includes a read only memory (ROM), a random access memory (RAM), and a non-volatile memory (NVM). The ROM and NVM store a control program, control data, and the like. The RAM functions as a work memory and stores temporary data.

The storage 13 stores print data and the like. The storage 13 may also store a control program, control data, and the like.

The communication interface 14 wirelessly communicates with the server 2 and transmits and receives data to and from the server 2.

The user interface 15 includes an input unit and an output unit. For example, the input unit and the output unit are a touch panel display that accepts input from a user and displays the accepted information.

The scanner 16 is a scanner that reads a one-dimensional code or a two-dimensional code. A barcode can be used as the one-dimensional code, and a Quick Response (QR) Code (registered trademark) can be used as the two-dimensional code.

The server 2 can be realized by a computer including one or more processors, memories, storages, and interfaces. As illustrated in FIG. 2, the server 2 includes a processor 21, a memory 22, a storage 23, and a communication interface 24.

The processor 21 is configured with a CPU and the like. The processor 21 executes various processes based on a control program and control data stored in the memory 22. For example, the processor 21 controls the transmission and reception of information through the communication interface 24 by executing the programs stored in the memory 22, and also causes the printer 3 to print an image based on a print job in response to a request from the client terminal 1.

The memory 22 includes a ROM, a RAM, and an NVM. The ROM and the NVM store control programs, control data, and the like. The RAM functions as a work memory and stores temporary data.

The memory 22 or the storage 23 stores a device registration list (first management information) and an account registration file (second management information). The device registration list includes printer identification information of the printer 3 registered as a device in the print system. The account registration file includes account information required for using a print service by the print system. In addition, before shipment, server identification information is stored in the storage 23, and the server identification information is transmitted to the printer 3 that is registered as a device. Furthermore, the storage 23 may store a control program, control data, and the like. In the exemplary embodiment, a case will be described in which the storage 23 stores the device registration list and the account registration file, but as described above, the NVM of the memory 22 may store the device registration list and the account registration file.

The communication interface 24 wirelessly communicates with the client terminal 1, and transmits and receives data to and from the client terminal 1. In addition, the communication interface 24 wirelessly communicates with the printer 3, and transmits and receives data to and from the printer 3.

As illustrated in FIG. 2, the printer 3 includes a processor 31, a memory 32, a storage 33, a communication interface 34, a user interface 35, and a print engine 36.

The processor 31 is configured with a CPU and the like. The processor 31 executes various processes based on a control program and control data stored in the memory 32. For example, the processor 31 executes a print application program stored in the memory 32 to acquire print data from the server 2 and cause the print engine 36 to execute image formation based on the print data.

The memory 32 includes a ROM, a RAM, and an NVM. The ROM and the NVM store the control program, the control data, and the like. The RAM functions as a work memory and stores temporary data.

The storage 33 stores print data and the like. In addition, the storage 33 may store the control program, control data, and the like.

The communication interface 34 wirelessly communicates with the server 2, and transmits and receives data to and from the server 2.

The user interface 35 includes an input unit and an output unit. For example, the input unit and the output unit are a touch panel display that accepts input from a user and displays the accepted information. For example, the user interface 35 displays a QR code, which is an example of print designation information for a print job.

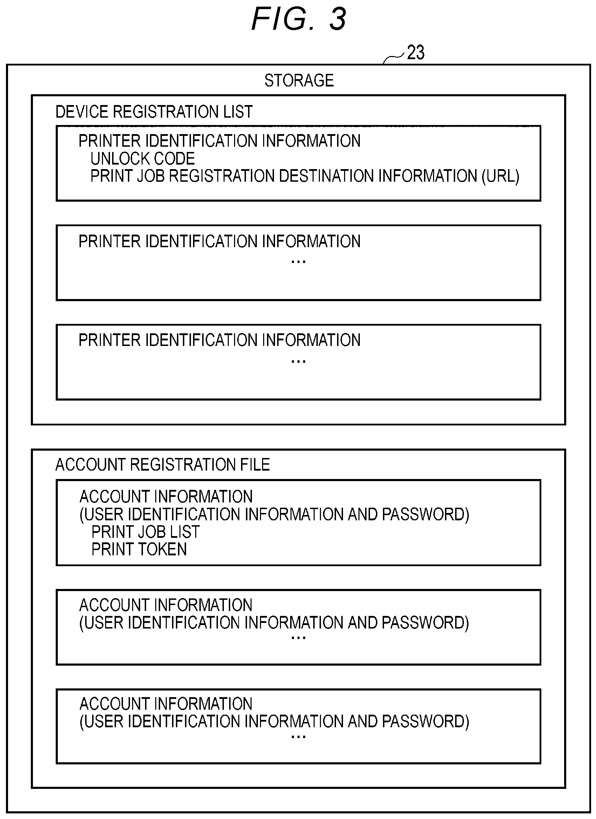

FIG. 3 is a diagram illustrating an example of a device registration list and an account registration file according to an embodiment.

As illustrated in FIG. 3, the storage 23 of the server 2 stores the device registration list and the account registration file.

Printer identification information of the printer 3, which is registered as a device in the print system, is registered in the device registration list. Furthermore, this printer identification information is correlated with an unlock code and print job registration destination information. The role of the device registration list will be described in detail below.

In addition, the account information registered as a user in the print system is registered in the account registration file. The account information includes user identification information and a password. Furthermore, the account information is correlated with a print job list and a print token. The role of the account registration file will be described in detail below.

### [Operation]

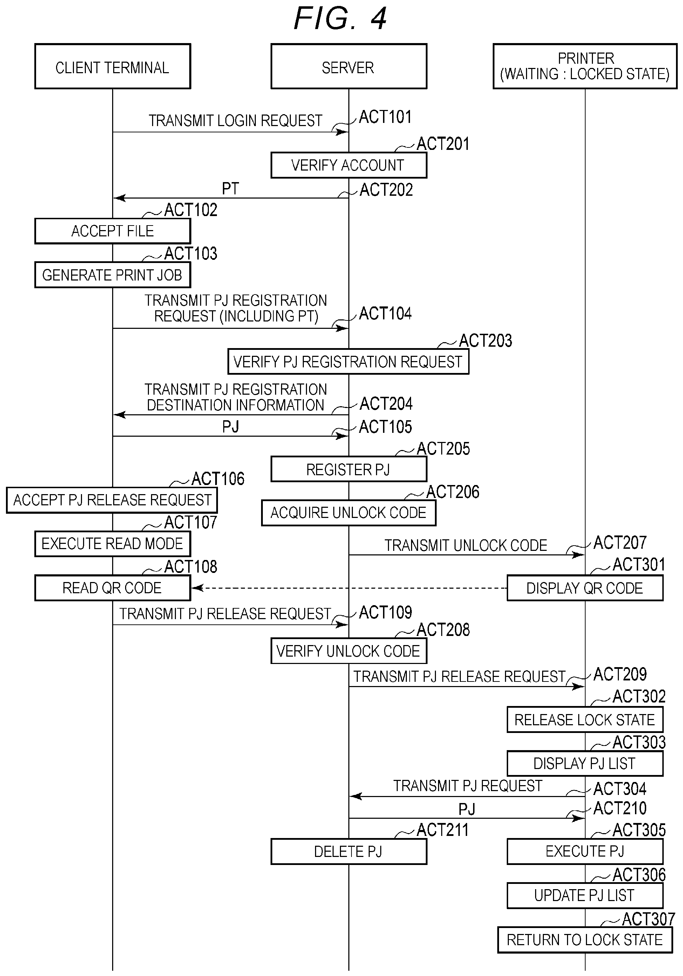

FIG. 4 is a diagram illustrating an example of an operation sequence of a print system according to the embodiment.

When a main power source of the client terminal 1, the server 2, and the printer 3 that configure the print system is turned on, the client terminal 1, the server 2, and the printer 3 transition to a standby state. In this standby state, the printer 3 becomes a lock state under the control of the processor 31. In the lock state, the user interface 35 does not accept operation input, and the print engine 36 does not execute print jobs.

First, registration of the printer 3 will be described. The user interface 35 of the printer 3 accepts input of information about the server 2 from an administrator, and the storage 33 stores the information about the server **2.** The information about the server 2 includes server identification information.

The communication interface 34 of the printer 3 transmits a device registration request to the server **2.** The device registration request includes printer identification information of the printer 3, and the like. The communication interface 24 of the server 2 receives the device registration request. The processor 21 verifies the device registration request. The storage 23 of the server 2 stores a device registration list. When the processor 21 permits registration of the printer 3 based on the verification result, the processor 21 generates an unlock code and print job registration destination information in correlation with the printer identification information included in the device registration request, registers the printer identification information in a device registration list of the storage 23 as illustrated in FIG. 3, and registers the unlock code and the print job registration destination information in correlation with the printer identification information.

Next, the registration of an account will be described. To use a print service through the print system, registration of an account is required. The user interface 15 of the client terminal 1 displays a new registration menu of the account and acquires user identification information and a password input through the new registration menu of the account. The communication interface 14 of the client terminal 1 transmits account information including the user identification information and password to the server 2. The storage 23 of the server 2 stores the account registration file. The communication interface 24 of the server 2 receives the account information, and the processor 21 registers the account information in the account registration file.

In addition, as illustrated in FIG. **3****,** the account information is correlated with a print job (or a print job list) and a print token. In the account registration file in which the predetermined account information is registered, a predetermined print job (or a predetermined print job list) and a specified print token correlated with the specified account information are registered.

After the registration of the account information is completed, the user interface 15 of the client terminal 1 displays a login menu and acquires user identification information and a password input through the login menu. The communication interface 14 transmits a login request including the user identification information and password to the server 2 (ACT101).

The communication interface 24 of the server 2 receives the login request from the client terminal **1.** The processor 21 of the server 2 compares the user identification information and password included in the login request with the user identification information and password registered in the account registration file to verify an account (ACT201).

The processor 21 permits login when a combination of the user identification information and the password included in the login request matches a combination of the user identification information and the password registered in the account registration file. The processor 21 rejects the login when the combination of the user identification information and the password included in the login request does not match the combination of the user identification information and the password registered in the account registration file.

When the processor 21 permits the login request based on the account information from the client terminal 1, the processor 21 issues a print token (PT) registered in correlation with the account information. For example, the print token includes an authentication code. The communication interface 24 transmits the print token to the client terminal 1 (ACT202). In addition, the storage 23 stores a token issuance file, and the processor 21 registers the issued print token or data corresponding to the issued print token in a token issuance file to prepare for verification of the print token.

The communication interface 14 receives the print token. The storage 13 stores the received print token. The user interface 15 displays a print target file selection menu and accepts one or more print target files input through the print target file selection menu (ACT102). In addition, the user interface 15 displays a print setting menu, and accepts print settings set through the print setting menu (ACT102). The one or more print target files may be files stored in the storage 13, or may be files downloaded from an external server through a network. One printer 3 selected from a plurality of printers 3 registered as devices in the print server 2 accepts print settings.

The storage 13 stores a print job file, and the processor 11 stores a print job including the print target file and print settings in the print job file. The processor 11 generates one print job in response to the selection of one print target file (ACT103). For example, when two print target files are selected, the processor 11 generates a first print job including a first print target file and print settings, and a second print job including a second print target file and print settings. In addition, the processor 11 assigns a job identification code to the print job and manages the print job using the job identification code.

The communication interface 14 transmits a print job registration request to the server 2 (ACT104). The print job registration request includes the print token and print settings.

The communication interface 24 receives the print job registration request. The processor 21 compares the print token included in the print job registration request with the print token registered in the token issuance file or data corresponding to the print token, and verifies the print job registration request (ACT203).

The processor 21 permits a print job registration when the print token included in the print job registration request matches the print token registered in the token issuance file, or when authentication is obtained based on the print token included in the print job registration request and data corresponding to the print token. The processor 21 rejects the print job registration when the print token included in the print job registration request does not match the print token registered in the token issuance file, or when authentication is not obtained based on the print token included in the print job registration request and the data corresponding to the print token.

When the print job registration is permitted, the processor 21 determines a registration destination of the print job based on the device registration list. As described above, the print job registration request includes the print settings set through the print setting menu, and the print settings include printer identification information of the selected printer 3. The processor 21 selects print job registration destination information registered in the device registration list including the printer identification information. For example, the print job registration destination information indicates a predetermined area of the storage 23. In response to the print job registration request received in ACT103, the processor 21 causes the print job registration destination information specifying the predetermined area of the storage 23 to be transmitted to the client terminal **1.** Accordingly, the communication interface 24 transmits the print job registration destination information to the client terminal 1 (ACT204).

For example, the print job registration destination information is a predetermined Uniform Resource Locator (URL). The processor 21 determines one registration destination corresponding to one print job, and determines a plurality of registration destinations corresponding to a plurality of print jobs.

The communication interface 14 receives the print job registration destination information, and the storage 13 stores the print job registration destination information. The storage 13 also stores the print token transmitted from the server 2. In addition, the communication interface 14 transmits the print job to the server 2 (ACT105).

The communication interface 24 receives the print job, and the processor 21 registers the received print job (print data) in a predetermined area indicated by the print job registration destination information, and registers job identification information of the received print job in a print job list of the account registration file (ACT205). The print token transmitted in ACT202 is registered in the account registration file, and at this point, the print job list in which the job identification information is registered and the print token transmitted in ACT202 are registered in the account registration file.

After registering the print job in the predetermined area, the processor 21 selects a device registration list based on the printer identification information of the printer 3 selected using the print settings, and acquires an unlock code correlated with the printer identification information from the device registration list (ACT206).

The processor 21 specifies the printer 3 based on the printer identification information correlated with the unlock code. The processor 21 causes the unlock code to be transmitted to the specified printer 3. Accordingly, the communication interface 24 transmits the unlock code to the specified printer 3 (ACT207).

The communication interface 34 of the printer 3 receives the unlock code, and the storage 33 stores the unlock code. The processor 31 generates print designation information based on server identification information and the unlock code. The print designation information generated in this manner includes the server identification information and the unlock code. For example, the print designation information is a one-dimensional code such as a barcode, or a two-dimensional code such as a QR code. A display of the user interface 35 displays the print designation information including the server identification information and the unlock code (ACT301). For example, the display displays the QR code corresponding to the print designation information.

On the other hand, the user interface 15 of the client terminal 1 that transmitted the print job displays a necessity confirmation menu of print job automatic release. For example, when the user interface 15 accepts a request for print job automatic release through the necessity confirmation menu (ACT106), the processor 11 sets a print job release to be valid and executes a read mode for reading the print designation information such as a QR code (ACT107). In response to the execution of the read mode, the scanner 16 is started.

When a user who possesses the client terminal 1 holds a reading unit of the scanner 16 of the client terminal 1 over the display of the printer 3, the scanner 16 reads the print designation information displayed on the display (ACT108).

The processor 11 designates a print job release request R1 in response to reading of the print designation information by the scanner 16 based on the print job automatic release being set to valid. The communication interface 14 of the client terminal 1 transmits the print job release request R1 to the server 2 to which the client terminal 1 is currently logged in (ACT109). The print job release request R1 includes the result of reading the print designation information, the stored print token, and the stored print job registration destination information. That is, the print job release request R1 includes the server identification information and the unlock code included in the print designation information. The print job release request R1 optionally includes the print job registration destination information. By including these pieces of information in the print job release request R1, the automatic release described below is implemented. If the print designation information is a QR code, the result of reading the print designation information includes a value obtained from the QR code.

The storage 33 continues to store the print job release request R1 for a certain period of time even after the print job release request R1 is transmitted to the server 2. For example, the print job release request R1 may be deleted depending on the timing of transmission of the next print job.

The communication interface 24 of the server 2 receives the print job release request R1 from the client terminal 1. The processor 21 verifies the unlock code based on the device registration list, the account registration file, and the print job release request R1 (ACT208), and specifies the print job list and one printer 3. As illustrated in FIG. 3, the device registration list includes the unlock code correlated with the printer identification information, and the like. In addition, as illustrated in FIG. 3, the account registration file includes the print job list and the print token correlated with the account information. The print job release request R1 includes the server identification information, the unlock code, the print token, and the print job registration destination information. The print job release request R1 optionally includes the print job registration destination information.

The processor 21 permits the release of the print job when the unlock code included in the print job release request R1 matches the unlock code correlated with the printer identification information of the device registration list. In addition, the processor 21 retrieves the print token that matches the print token included in the print job release request R1 from the account registration file, and specifies the print job list from the account information correlated with the retrieved print token. In addition, the processor 21 retrieves the unlock code that matches the unlock code included in the print job release request R1 from the device registration list, specifies the printer identification information correlated with the retrieved unlock code, and specifies one printer 3 from the specified printer identification information. In addition, the processor 21 causes an image based on the print job registered in the registration destination to be printed by the specified printer 3 based on the print job registration destination information correlated with the specified printer identification information. When the print job release request R1 includes the print job registration destination information, a configuration, in which the processor 21 causes an image based on the print job registered in the registration destination to be printed by the specified printer 3 based on the print job registration destination information included in the print job release request R1, may be adopted. The process in which the processor 21 causes the image based on the print job to be printed by the specified printer 3 is implemented as follows.

First, the processor 21 causes a print job release request R2 to be transmitted to the specified printer 3 by the communication interface 24. Accordingly, the communication interface 24 transmits the print job release request R2 to the specified printer 3 (ACT209). The print job release request R2 transmitted in ACT209 includes a print job list specified from the account information. The print job release request R2 may also include the print job registration destination information.

The communication interface 34 of the printer 3 receives the print job release request R2 transmitted in ACT209. The processor 31 releases the lock state based on the print job release request R2 (ACT302). When the lock is released, the user interface 35 becomes able to accept operation input, and the print engine 36 becomes able to execute a print job.

The user interface 35 displays the print job list included in the print job release request R2 (ACT303). In addition, the user interface 35 may display automatic release or automatic printout together with the print job list. With this configuration, the user can recognize the automatic release or the automatic printout.

The processor 31 detects the print job list or print job registration destination information included in the print job release request R2. The processor 31 causes a print job request to be transmitted according to the print job list or the print job registration destination information. Accordingly, the communication interface 34 transmits the print job request to the server 2 (ACT304).

The communication interface 24 of the server 2 receives the print job request from the printer 3. The processor 21 causes the print job registered in the registration destination to be transmitted to the specified printer 3 by the communication interface 24. Accordingly, the communication interface 24 transmits the print job registered in the registration destination to the printer 3 (ACT210).

The communication interface 34 of the printer 3 acquires the print job. The print engine 36 executes printing based on the acquired print job (ACT305). After printing is ended, the processor 31 updates the print job list (ACT306). When the processor 31 detects a predetermined user operation or no operation for a certain period of time, the processor 31 causes a lock screen to be displayed and causes the printer 3 to return to the lock state (ACT307). In addition, the processor 31 requests the server 2 to issue a new unlock code, and generates a QR code corresponding to the print designation information.

In addition, the processor 21 of the server 2 deletes the transmitted print job (ACT211).

As described above, since the selection operation of the print job for print output is omitted, an operational burden may be reduced.

Here, as described in ACT106, a case in which the user interface 15 accepts a print job manual release request without accepting the request for print job automatic release through the necessity confirmation menu will be described.

In this case, the processor 11 sets the print job release to be invalid, and executes a read mode for reading the print designation information such as a QR code. In response to the execution of the read mode, the scanner 16 is started. The scanner 16 reads the print designation information displayed on the user interface 35 of the printer 3. That is, the scanner 16 reads the unlock code code and the like included in the print designation information. The processor 11 designates a print job manual selection request in response to the reading of print designation information by the scanner 16 based on the print job automatic release being set to invalid. The communication interface 14 of the client terminal 1 transmits the designated print job manual selection request to the server 2 to which the user is currently logged in. The print job manual selection request includes the result of reading the print designation information.

The communication interface 24 of the server 2 receives the print job manual selection request from the client terminal 1. The processor 21 causes the print job manual selection request to be transmitted to the specified printer 3 by the communication interface 24. Accordingly, the communication interface 24 transmits the print job manual selection request to the specified printer **3.** The transmitted print job manual selection request includes the unlock code and the print job list. The print job list includes the job identification code.

The communication interface 34 of the printer 3 receives the print job manual selection request. The user interface 35 displays the print job list included in the print job manual selection request and accepts a print job selected by the user from the print job list.

The processor 31 causes a print job request requesting the print job selected from the print job list to be transmitted by the communication interface 34. Accordingly, the communication interface 34 transmits the print job request to the server 2. The print job request transmitted here may include the job identification code that specifies the print job selected from the print job list.

The communication interface 24 of the server 2 receives the print job request from the printer 3. The processor 21 causes the print job selected by the user from the print job list to be transmitted to the specified printer 3 by the communication interface 24. Accordingly, the communication interface 24 transmits the print job selected by the user from the print job list, among the print jobs registered in the registration destination, to the printer 3.

The communication interface 34 of the printer 3 acquires the print job. The print engine 36 executes printing based on the acquired print job. After printing is ended, the processor 31 causes the printer 3 to return to the lock state.

In addition, the processor 21 of the server 2 deletes the transmitted print job.

As described above, a desired print job can be output by a selection operation of the print job for print output.

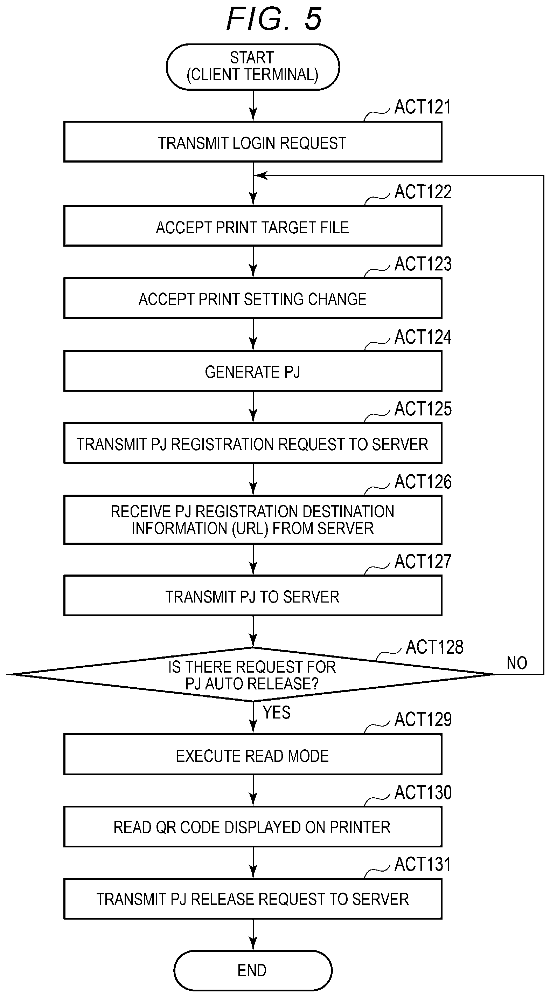

FIG. 5 is a flowchart illustrating an example of the operation of the client terminal according to the embodiment. The operation illustrated in FIG. 5 corresponds to the operation of the client terminal 1 illustrated in FIG. 4, but the description thereof is partially simplified. The operation of the client terminal 1 will be described in detail below with reference to FIG. 5.

As illustrated in FIG. 5, the user interface 15 of the client terminal 1 displays a login menu. The communication interface 14 transmits a login request including user identification information and a password input through the login menu to the server 2 (ACT121).

After login is permitted by the server 2, the user interface 15 displays a print target file selection menu, and accepts one or more print target files input through the print target file selection menu (ACT122).

In addition, the user interface 15 displays a print setting menu and accepts print settings set through the print setting menu (ACT123).

The processor 11 generates one print job in response to the selection of one print target file (ACT124).

The communication interface 14 transmits a print job registration request to the server 2 (ACT125) and receives print job registration destination information transmitted from the server 2 (ACT126).

The communication interface 14 transmits a print job to the server 2 based on the print job registration destination information (ACT127).

The user interface 15 of the client terminal 1 that transmitted the print job displays the necessity confirmation menu of the print job automatic release. When the user interface 15 accepts the request for print job automatic release through the necessity confirmation menu (YES in ACT128), the processor 11 sets the print job release to be valid and executes a read mode for reading print designation information such as a QR code (ACT129). In response to the execution of the read mode, the scanner 16 is started.

When a user who possesses the client terminal 1 holds the scanner 16 of the client terminal 1 over the QR code displayed on a display of the printer 3, the scanner 16 reads the QR code displayed on the display (ACT130).

The processor 11 designates a print job release request R1 in response to reading of the print designation information including an unlock code and the like by the scanner 16 based on the print job automatic release being set to valid. The communication interface 14 transmits a designated print job release request R1 to the server 2 to which the client terminal 1 is currently logged in (ACT131). The print job release request R1 includes the unlock code and the like. An automatic release is realized by including an unlock code and the like in the print job release request R1.

On the other hand, when the request for print job automatic release is not made through the necessity confirmation menu (NO in ACT128), the user interface 15 becomes able to accept the print target file again. Furthermore, when the user interface 15 accepts the print job manual release request through the necessity confirmation menu, the processor 11 sets the print job release to be invalid and executes a read mode for reading the print designation information such as the QR code. The processor 11 designates a print job manual selection request in response to the reading of print designation information including the unlock code by the scanner 16 based on based on the print job automatic release being set to invalid. The communication interface 14 transmits the designated print job manual selection request to the server 2 to which the client terminal 1 is currently logged in.

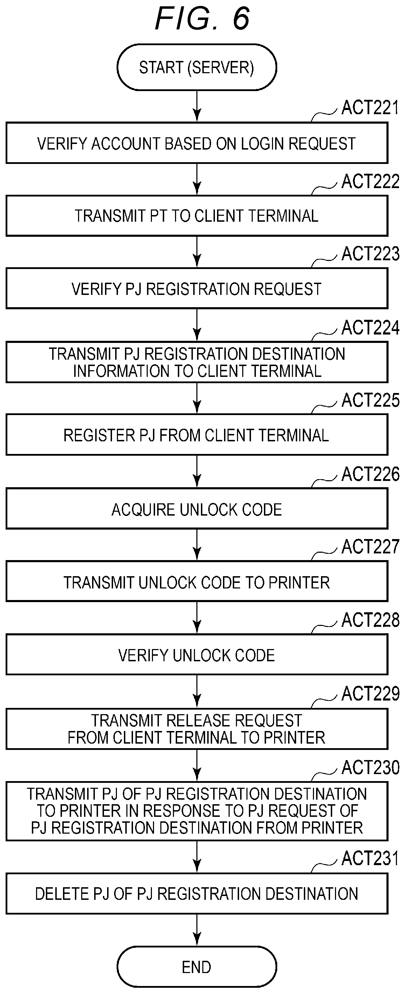

FIG. 6 is a flowchart illustrating an example of the operation of the server according to the embodiment. The operation illustrated in FIG. 6 corresponds to the operation of the server 2 illustrated in FIG. 4, but the description thereof is partially simplified. The operation of the server 2 will be described in detail below with reference to FIG. 6.

The communication interface 24 receives a login request from the client terminal 1. The processor 21 compares user identification information and a password included in the login request with the user identification information and password registered in an account registration file to verify an account (ACT221).

When the processor 21 permits the login, the communication interface 24 transmits a print token to the client terminal 1 (ACT222) and receives a print job registration request.

The processor 21 verifies the print job registration request based on the print token included in the received print job registration request (ACT223).

When the print job registration is permitted according to the verification result of the print job registration request, the processor 21 determines a print job registration destination. The communication interface 24 transmits print job registration destination information indicating the print job registration destination to the client terminal 1 (ACT224), and receives a print job from the client terminal 1.

The processor 21 registers the received print job in a predetermined area indicated by the print job registration destination information (ACT225).

After registering the print job in the predetermined area, the processor 21 acquires print designation information of the print job (ACT226).

The communication interface 24 transmits the print designation information to the printer 3 specified based on the printer identification information correlated with an unlock code (ACT227). The print designation information may include a print job list.

The specified printer 3 displays the print designation information. For example, the printer 3 displays the print job list included in the print designation information. The client terminal 1 reads the displayed print designation information and transmits a print job release request R1. In addition, the client terminal 1 for which the print job release is set to be valid transmits the print job release request R1. The client terminal 1 for which the print job release is set to be invalid transmits a print job manual selection request.

The communication interface 24 receives the print job release request R1 or a print job manual selection request. When the print job release request R1 is received, the processor 21 verifies the unlock code based on a device registration list, an account registration file, and the print job release request R1 (ACT228). The communication interface 24 transmits the print job release request R2 or the print job manual selection request to the specified printer 3 (ACT229).

When the communication interface 24 transmits the print job release request R2, the communication interface 24 receives a print job request from the printer 3 requesting a print job registered in a registration destination, and transmits the print job registered in the registration destination to the printer 3 (ACT230). The processor 21 deletes the print job in the registration destination (ACT231).

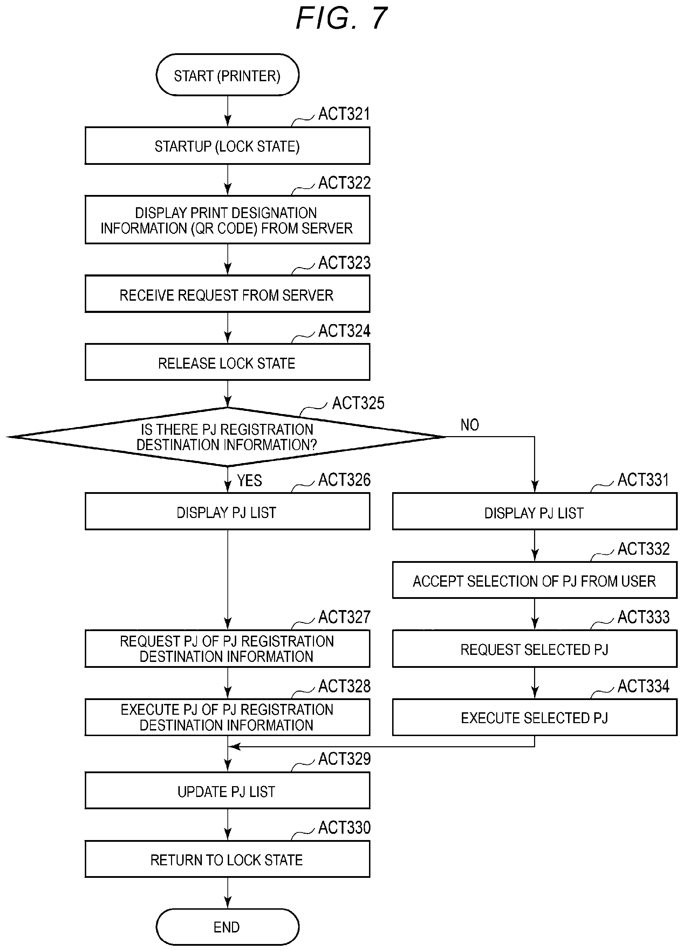

FIG. 7 is a flowchart illustrating an example of the operation of the printer according to the embodiment. The operation illustrated in FIG. 7 corresponds to the operation of the printer 3 illustrated in FIG. 4, but the description thereof is partially simplified. The operation of the printer 3 will be described in detail below with reference to FIG. 7.

The printer 3 becomes a lock state after startup (ACT321). The communication interface 34 receives print designation information transmitted from the server 2, and a display of the user interface 35 displays the print designation information (ACT322). The displayed print designation information is, for example, a QR code, and is read by the scanner 16 of the client terminal 1.

The communication interface 34 receives a print job release request R2 or a print job manual selection request transmitted from the server 2 (ACT323).

The processor 31 releases the lock state based on the print job release request R2 or the print job manual selection request (ACT324).

When the print job release request R2 is received, the print job release request R2 includes a print job list and print job registration destination information (YES in ACT325). The user interface 35 displays a print job list included in the print job release request R2 (ACT326).

The processor 31 detects the print job list or the print job registration destination information included in the print job release request R2, and the communication interface 34 transmits a print job request requesting a print job registered in the print job list or a registration destination to the server 2 in response to the detection of the print job list or the print job registration destination information (ACT327).

The server 2 receives the print job request from the printer 3 and transmits the print job registered in the print job list or the registration destination to the printer 3. The communication interface 34 acquires the print job. The print engine 36 executes printing based on the acquired print job (ACT328). After printing is ended, the processor 31 updates the print job list (ACT329). When the processor 31 detects a predetermined user operation or no operation for a certain period of time, the processor 31 displays a lock screen and causes the printer 3 to return to the lock state (ACT330).

When the print job manual selection request is received, the print job manual selection request does not include the print job registration destination information (NO in ACT325). The user interface 35 displays the print job list included in the print job manual selection request (ACT331) and accepts a print job selected by the user from the print job list (ACT332).

The communication interface 34 transmits the print job request requesting the print job selected from the print job list to the server 2 (ACT333).

The server 2 receives the print job request from the printer 3 and transmits the print job selected by the user from the print job list among the print jobs registered in the registration destination to the printer **3.**

The communication interface 34 acquires the print job. The print engine 36 executes printing based on the acquired print job (ACT334). After printing is ended, the processor 31 updates the print job list (ACT329).

According to the exemplary embodiment, the server 2 can transmit the print designation information to the printer 3, the printer 3 can display the print designation information, and the client terminal 1, for which print job release is set to be valid, can execute the print job registered in the registration destination managed by the server 2 by simply reading the print designation information from the printer 3. Since the user is freed from the operation of selecting a print job on the printer for print output, the operational burden for print output can be reduced.

The program according to the exemplary embodiment may be transferred in a state of being stored in an electronic device such as the client terminal 1, the server 2, or the printer 3, or may be transferred in a state of being not stored in the electronic device. In the latter case, the program may be transferred via a network, or may be transferred in a state of being stored in a storage medium. The storage medium is a non-transitory tangible medium. The storage medium is a computer-readable medium. The storage medium may be any medium, such as an optical disk or a memory card, that can store the program and that can be read by a computer, and may be in any form. The electronic device downloads the program transferred (provided) through a network and installs the program in a memory, or reads the program from the storage medium and installs the program in the memory.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure as defined by the appended claims. The accompanying claims and their equivalents are intended to cover such forms or modifications as would fall within the scope of the disclosure.

## Claims

1. A print server comprising:
a memory configured to store first management information that correlates printer identification information for identifying a printer with an unlock code for the printer;
a communication interface configured to communicate with a client terminal and the printer; and
a processor configured to control transmission and reception of information by the communication interface,
wherein the processor is configured to:
transmit registration destination information of a print job to the client terminal through the communication interface in response to a registration request for the print job transmitted from the client terminal;
register the print job transmitted from the client terminal in a registration destination indicated by the registration destination information;
transmit the unlock code to the printer through the communication interface; and
specify the printer from the first management information based on the unlock code included in a first release request for the print job transmitted from the client terminal that reads print designation information including the unlock code displayed on the printer, and cause the specified printer to print an image based on the print job registered in the registration destination.

2. The server according to claim 1,
wherein the first management information is further information that correlates the printer identification information with the registration destination information, and
the processor is configured to:
transmit a second release request to the printer through the communication interface; and
transmit the print job registered in the registration destination to the printer through the communication interface in response to a request for the print job from the printer that detects the print job list included in the second release request.

3. The server according to claim 1 or 2,
wherein the memory is configured to store second management information that correlates account information with a print token, and
the processor is configured to:
permit a login request based on the account information from the client terminal;
transmit the print token to the client terminal;
store the second management information that correlates the account information with the print job in the memory in response to the registration request including the print token from the client terminal; and
specify the print job from the second management information in response to the release request including the print token from the client terminal.

4. A print system comprising:
a print server configured to store first management information that correlates printer identification information for identifying a printer with an unlock code for the printer; and
the printer specified by the printer identification information,
wherein the print server is configured to:
transmit registration destination information of a print job to the client terminal in response to a registration request for the print job transmitted from the client terminal;
register the print job transmitted from the client terminal in a registration destination indicated by the registration destination information;
transmit the unlock code to the printer; and
specify the printer from the first management information based on the unlock code included in a release request for the print job transmitted from the client terminal that reads print designation information including the unlock code displayed on the printer, and cause the specified printer to print the print job registered in the registration destination, and
the printer is configured to print an image based on the print job registered in the registration destination.

5. The system according to claim 4,
wherein the print system comprises the client terminal, and
the client terminal is configured to:
read the print designation information displayed on the printer; and
transmit the release request to the print server.

6. A print method comprising:
storing first management information that correlates printer identification information for identifying a printer with an unlock code for the printer;
transmitting registration destination information of a print job to the client terminal in response to a registration request for the print job transmitted from the client terminal;
registering the print job transmitted from the client terminal in a registration destination indicated by the registration destination information;
transmitting the unlock code to the printer; and
specifying the printer from the first management information based on the unlock code included in a release request for the print job transmitted from the client terminal that reads print designation information including the unlock code displayed on the printer, and causing the specified printer to print an image based on the print job registered in the registration destination.
